# EUROPEAN PATENT APPLICATION

(11) **EP 3 109 495 A1**
(43) Date of publication of application: **28.12.2016**
(21) Application number: 15752295.4
(22) Date of filing: 13.02.2015
(51) Int. Cl.: F16C 33/50

(54) **ROLLER BEARING CAGE**

(30) Priority: 19.02.2014 JP 2014029508
(71) Applicant: JTEKT Corporation, Osaka-shi, Osaka 542-8502 (JP)
(72) Inventor: OSHIMA, Yoshio, Osaka-shi Osaka 542-8502 (JP)
(74) Representative: Winter, Brandl, Fürniss, Hübner, Röss, Kaiser, Polte - Partnerschaft mbB
(86) International application number: PCT/JP2015/053891
(87) International publication number: WO 2015/125693

(57) **Abstract**

A roller bearing cage (100) for holding a plurality of taper rollers (20) (rollers) disposed rollably in a ring-shaped space formed between an inner ring raceway surface on an outer circumferential surface of an inner ring and an outer ring raceway surface on an inner circumferential surface of an outer ring, includes: arc-shaped parts (110x, 110y) (first members) disposed at both ends in an axial direction of the taper rollers (20) disposed in the ring-shaped space, and divided into a plurality of segments each having a circumferential length (114) covering a prescribed range of a circumferential region; and axial members (120) (connecting members) connecting them from the axial direction.

## Description

### Technical Field

The present invention relates to a roller bearing cage.

### Background Art

A technique of segment cages (divided cages) including independently divided pockets of a cage is conventionally known as a roller bearing cage for holding a plurality of rollers rollably in a ring-shaped space between an inner ring raceway surface on the outer circumferential surface of an inner ring and an outer ring raceway surface on the inner circumferential surface of an outer ring (for example, Patent Literature 1). Such segment cages are used for improving the assemblability of a large roller bearing used in a wind power generator or the like. Here, since segment cages are independently provided in a bearing, the segments cages can come into surface-to-surface contact with each other. In particular, if lead/lag or the like occurs in some rollers, a clearance between adjacent segment cages is probably increased, and it is apprehended that the segment cages may be damaged by large impact load caused when the clearance is narrowed.

Here, with respect to divided cages for a roller bearing in which a large number of segments are combined in a ring shape, the following technique is known: A common wire is inserted through all the segments to form a segment line, and the segment line is formed into a ring shape by tightening the wire to directly or indirectly connect the ends thereof to each other (for example, Patent Literature 2).

### Citation List

### Patent Literature

Patent Literature 1: JP-A-2013-36510
Patent Literature 2: JP-A-2011-137530

### Summary of Invention

### Technical Problem

In the technique of Patent Literature 2, however, holes are formed in a circumferential direction in arc-shaped portions at both ends in the axial direction of rollers, and hence, it is apprehended that the holes in the arc shape are difficult to form, and that the production cost is accordingly increased. Besides, there is a concern of assemblability that the wire is difficult to assemble. Furthermore, the wire having the ends connected to each other may be stretched to be loosened by, for example, inertia caused by the rolling movement of the rollers. Therefore, even when the wire is once tightened in connecting the cages with the wire, it is apprehended that a clearance is unavoidably formed between the segment cages in accordance with the operation of the roller bearing.

The present invention is accomplished in consideration of the above, and a problem to be solved by the present invention is to provide a roller bearing cage that is improved in both formability and assemblability and is capable of inhibiting formation of a clearance between adjacent cages.

### Solution to Problem

In order to solve the above-described problem, a roller bearing cage of the present invention employ the following means: First, a roller bearing cage according to a first invention is a roller bearing cage for holding a plurality of rollers disposed rollably in a ring-shaped space formed between an inner ring raceway surface on an outer circumferential surface of an inner ring and an outer ring raceway surface on an inner circumferential surface of an outer ring, the roller bearing cage including: first members disposed at both ends in an axial direction of the rollers disposed in the ring-shaped space, and divided into a plurality of segments each having a circumferential length covering a prescribed range of a circumferential region; and connecting members connecting, from the axial direction, the first members arranged in a circumferential direction.

According to the first invention, the first members are disposed at both ends in the axial direction of the rollers disposed in the ring-shaped space, and are divided into a plurality of segments each having a circumferential length covering a prescribed range of the circumferential region. Furthermore, the roller bearing cage includes the connecting members connecting, from the axial direction, these first members arranged in the circumferential direction. Therefore, cages can be connected to be assembled into a ring shape, and hence, formation of a clearance between the cages can be inhibited. Besides, since the first members are configured to be arranged in the circumferential direction and connected from the axial direction by the connecting members, formability and assemblability of the cages can be both improved.

Next, according to a second invention, in the roller bearing cage of the first invention, each of the rollers has a hole extending along a central axis thereof, and each of the connecting members connects, from the axial direction, the first members arranged in the circumferential direction, and is inserted into the hole of a corresponding one of the rollers for guiding the roller.

According to the second invention, each roller has a hole extending along the central axis thereof, and each of the connecting members is configured to connect, from the axial direction, the first members arranged in the circumferential direction, and to be inserted into the hole for guiding the roller. Therefore, damage of the cages can be inhibited by reducing impact force caused between the cages. Besides, occurrence of abnormal noise caused by the impact between the cages can be inhibited. Furthermore, the rollers and the cages can be stably rotated to reduce bearing torque.

Next, according to a third invention, in the roller bearing cage of the second invention, the hole extending in the central axis of the roller is formed as a through hole penetrating in the axial direction, and each of the connecting members is inserted through the through hole from a side of one end in the axial direction of the roller to a side of the other end in the axial direction of the roller, and connects, from the axial direction, the first members arranged in the circumferential direction at both ends in the axial direction of the roller.

According to the third invention, since there is no need to provide plural connecting members to one roller, the number of components can be reduced, and the production cost can be reduced. Besides, both the ends of the connecting member are supported by the first members arranged in the circumferential direction at both ends in the axial direction of the rollers, and hence, the rollers can be stably supported. Therefore, the rollers and the cages can be further stably rotated.

Next, according to a fourth invention, in the roller bearing cages of any one of the first invention to the third invention, the first members have second members (column parts) extending in the axial direction for partitioning the rollers adjacent to each other in the circumferential direction.

According to the fourth invention, the first members have the second members extending in the axial direction for partitioning the rollers adjacent to each other in the circumferential direction. Therefore, the rollers adjacent to each other can be stably held within the cages.

Next, according to a fifth invention, in the roller bearing cage of the fourth invention, the second members are formed to connect the first members disposed at both ends in the axial direction of the rollers disposed in the ring-shaped space.

According to the fifth invention, the second members are formed to connect the first members disposed at both ends in the axial direction of the rollers disposed in the ring-shaped space. Therefore, the first members disposed at both ends in the axial direction of the roller and the second member are integrally formed, and hence, the number of components can be reduced, and the production cost can be reduced.

Next, according to a sixth invention, in the roller bearing cage of any one of the first invention to the fifth invention, each of the first members has a thin portion formed to have a small thickness in the axial direction as a part of an end portion of the first member to be connected by a corresponding one of the connecting members to another first member, and the first members have a uniform thickness in the axial direction by overlapping the thin portions of the first members.

According to the sixth invention, the first members can attain a uniform thickness in the axial direction owing to the thin portions, and hence, the roller bearing cages can be made compact. As a result, a compact roller bearing can be obtained. Advantageous Effects of Invention

Owing to the above-described means of the present invention, the present invention provides a roller bearing cage that is improved in both formability and assemblability and is capable of inhibiting formation of a clearance between adjacent cages.

### Brief Description of Drawings

[Fig. 1] Fig. 1 is a cross-sectional view, taken on an axial direction, schematically illustrating a taper roller bearing according to Embodiment 1.
[Fig. 2] Fig. 2 is a perspective view of a roller bearing cage of Embodiment 1.
[Fig. 3] Fig. 3 is a partial enlarged perspective view of Fig. 2.
[Fig. 4] Fig. 4 is a partial enlarged plan view of a roller bearing cage and rollers of Embodiment 1.
[Fig. 5] Fig. 5 is a partial enlarged plan view of a roller bearing cage and rollers of Embodiment 2.
[Fig. 6] Fig. 6 is a partial enlarged plan view of a roller bearing cage and rollers of Embodiment 3.
[Fig. 7] Fig. 7 is a partial enlarged plan view of a roller bearing cage and rollers of Embodiment 4.
[Fig. 8] Fig. 8 is a partial enlarged plan view of a roller bearing cage and rollers of Embodiment 5.
[Fig. 9] Fig. 9 is a partial enlarged plan view of a roller bearing cage and rollers of Embodiment 6.

### Description of Embodiments

### [Embodiment 1]

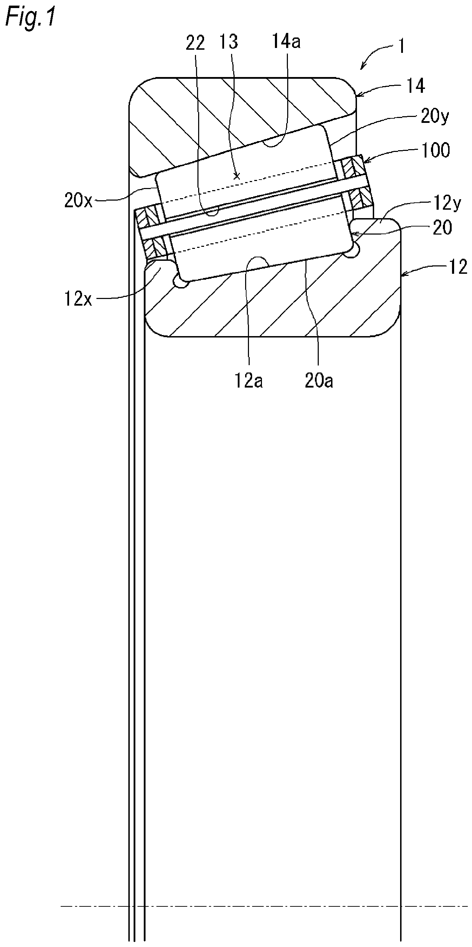

Embodiment 1 of a roller bearing cage of the present invention will now be described with reference to Figs. 1 to 4. A roller bearing of Embodiment 1 is a large roller bearing 1 used for, for example, supporting a main shaft in wind power generation. Fig. 1 is a cross-sectional view, taken on an axial direction, schematically illustrating the large roller bearing 1. As illustrated in Fig. 1, the roller bearing 1 is substantially mainly constituted by an inner ring 12, a taper roller 20, an outer ring 14 and a roller bearing cage 100.

The inner ring 12 has, on an outer circumferential surface thereof, an inner ring raceway surface 12a in the shape of a taper shaft (a conical surface) as illustrated in Fig. 1. A small rib 12x in the shape of a flange protruding outward in a radial direction is formed on the smaller diameter end side of the inner ring raceway surface 12a. Besides, a large rib 12y in the shape of a flange protruding outward in the radial direction is formed on the larger diameter end side of the inner ring raceway surface 12a. The outer ring 14 is disposed, to be opposed, on the same central line on the outer circumferential side of the inner ring raceway surface 12a of the inner ring 12, and has, on an inner circumferential surface thereof, an outer ring raceway surface 14a in the shape of a taper hole (a conical surface).

The taper roller 20 (roller) is disposed, in a plural number, rollably in a ring-shaped space 13 between the inner ring raceway surface 12a of the inner ring 12 and the outer ring raceway surface 14a of the outer ring 14 as illustrated in Fig. 1. The taper roller 20 has a conical surface 20a to be rollable in a state sandwiched between the inner ring raceway surface 12a and the outer ring raceway surface 14a. A smaller-diameter-side end surface 20x (one end in the axial direction) is formed on the smaller diameter end side of the conical surface 20a, and a larger-diameter-side end surface 20y (the other end in the axial direction) is formed on the larger diameter end side. Besides, a through hole 22 is formed to axially penetrate through the taper roller 20 along the central axis thereof. A plurality of taper rollers 20 are held in pockets of the roller bearing cage 100 and disposed to be sandwiched between the inner ring 12 and the outer ring 14, so as to be capable of rotating and revolving on an outer circumferential surface of a main shaft or the like for supporting in, for example, wind power generation.

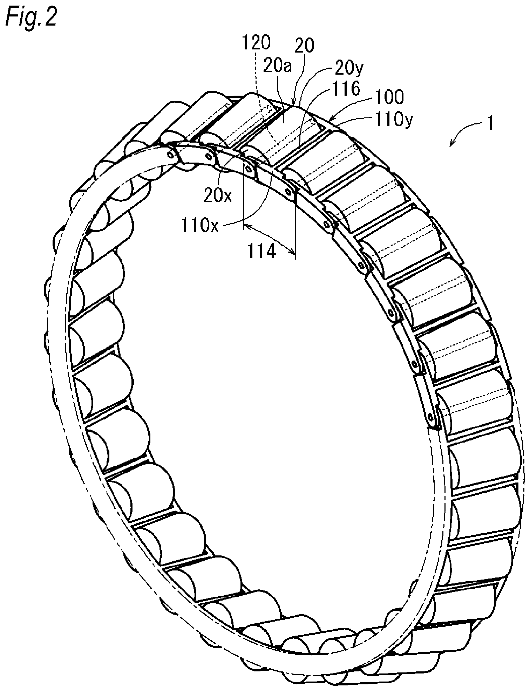

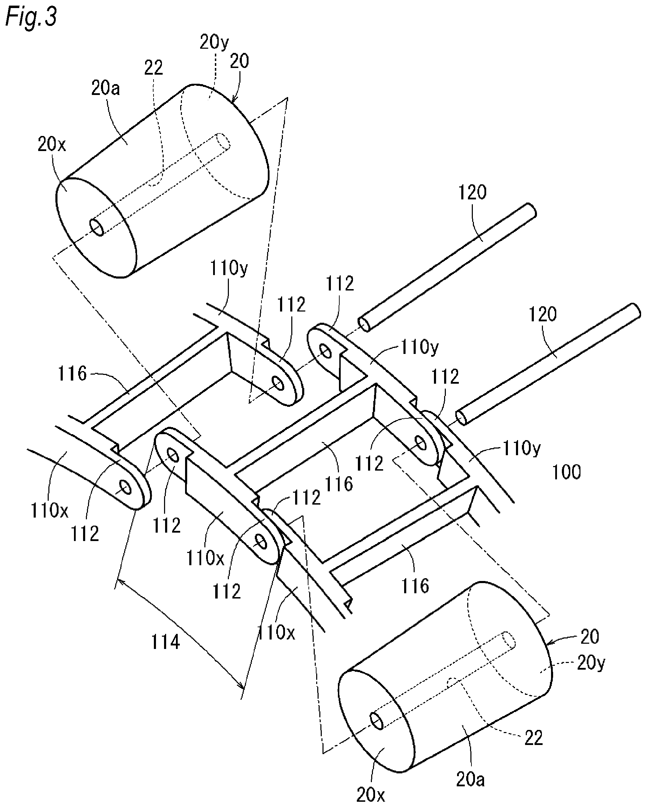

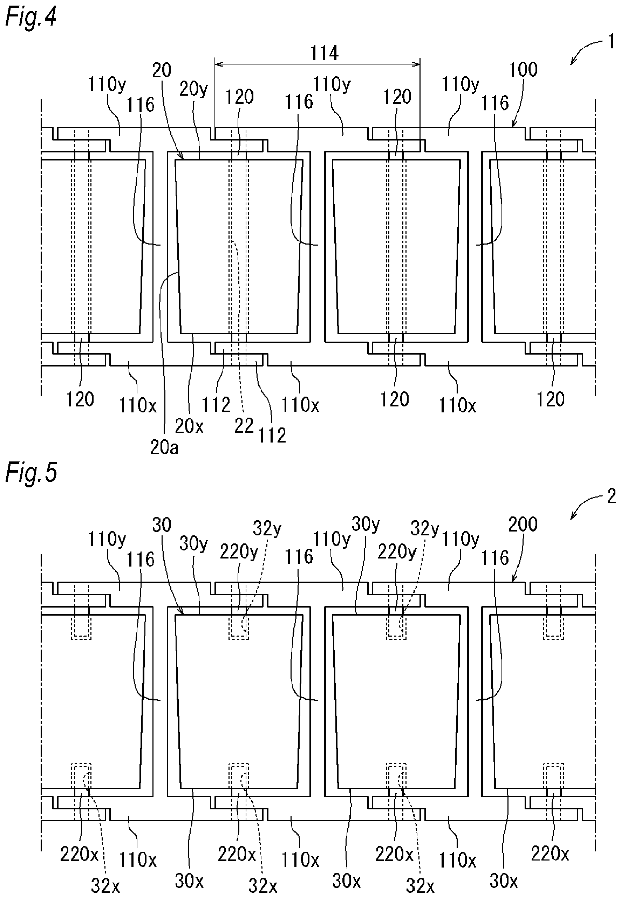

Each roller bearing cage 100 holds, as illustrated in Fig. 1, each taper roller 20 in a state where the conical surface 20a can rotate and revolve between the inner ring raceway surface 12a of the inner ring 12 and the outer ring raceway surface 14a of the outer ring 14. The roller bearing cage 100 is constituted, as illustrated in Figs. 2 and 3, from a synthetic resin excellent in oil resistance and heat resistance. Each roller bearing cage 100 includes arc-shaped parts 110x and arc-shaped parts 110y (first members), column parts 116 (second members), and axial members 120 (connecting members). The arc-shaped parts 110x and 110y respectively support the smaller-diameter-side end surfaces 20x and the larger-diameter-side end surfaces 20y of the taper rollers 20. The arc-shaped parts 110x and the arc-shaped part 110y (the first members) are respectively disposed at both ends along the axial direction of the taper rollers 20 disposed in the ring-shaped space 13, and are constituted to be divided into plural segments each having a circumferential length 114 covering a prescribed range in a circumferential region. Here, the arc-shaped part 110x is disposed in a position opposing the smaller-diameter-side end surface 20x of the taper roller 20. The arc-shaped part 110y is disposed in a position opposing the larger-diameter-side end surface 20y of the taper roller 20. Besides, the column part 116 is adjacent to the conical surface 20a of the taper roller 20 for partitioning the taper rollers 20 adjacent to each other in the circumferential direction. The column part 116 (the second member) is formed to connect the arc-shaped part 110x and the arc-shaped part 110y disposed at both ends along the axial direction of the taper roller 20 disposed in the ring-shaped space 13. The column part 116 extends along the axial direction between a middle portion along the circumferential direction of the arc-shaped part 110x and a middle portion along the circumferential direction of the arc-shaped part 110y so as to connect these parts to each other. In this manner, the arc-shaped part 110x and the arc-shaped part 110y (the first members) and the column part 116 (the second member) are formed in a substantially H shape in a planar view as illustrated in Fig. 4. Besides, thin portions 112 having a small thickness in the axial direction are formed in parts of the ends of the arc-shaped part 110x and the arc-shaped part 110y adjacent to each other (i.e., parts of the ends of the arc-shaped part 110x and the arc-shaped part 110y to be connected to each other through the axial member 120). The thin portions 112 are formed by cutting out, in the axial direction, the ends of the arc-shaped part 110x and the arc-shaped part 110y into a step shape. When these thin portions 112 are overlapped, the arc-shaped part 110x and the arc-shaped part 110y have a uniform thickness along the axial direction.

The axial member 120 (the connecting member) is a member for connecting, from the axial direction, the arc-shaped parts 110x and the arc-shaped parts 110y respectively arranged in the circumferential direction. The axial member 120 is obtained by forming a steel member into an axial shape. The axial member 120 is inserted through the through hole 22 from the side of the smaller-diameter-side end surface 20x (one end in the axial direction) of the taper roller 20 to the side of the larger-diameter-side end surface 20y (the other end in the axial direction), and connects, from the axial direction, the arc-shaped parts 110x and the arc-shaped parts 110y arranged in the circumferential direction at both ends along the axial direction of the taper roller 20. More specifically, the axial member 120 connects, from the axial direction, the arc-shaped parts 110x arranged in the circumferential direction on the side of the smaller-diameter-side end surface 20x (one end in the axial direction) of the taper roller 20, is inserted through the through hole 22 penetrating the taper roller 20 from the side of the smaller-diameter-side end surface 20x to the side of the larger-diameter-side end surface 20y, and also connects, from the axial direction, the arc-shaped parts 110y arranged in the circumferential direction on the side of the larger-diameter-side end surface 20y of the taper roller 20.

In this manner, the roller bearing cage 100 of Embodiment 1 attain the following effects: The arc-shaped parts 110x and the arc-shaped parts 110y (the first members) are disposed at both ends in the axial direction of the taper rollers 20 (rollers) disposed in the ring-shaped space 13, so as to be divided into a plurality of segments each having a circumferential length 114 covering a prescribed range in the circumferential region. The roller bearing cage 110 further includes the axial members 120 (the connecting members) connecting, from the axial direction, the arc-shaped parts 110x and the arc-shaped parts 110y arranged in the circumferential direction. Therefore, the arc-shaped parts 110x and the arc-shaped parts 110y can be connected and assembled into the ring-shaped cage, and hence, the formation of clearances between the arc-shaped parts 110x or between the arc-shaped parts 110y can be inhibited. Besides, since the arc-shaped parts 110x and the arc-shaped parts 110y are arranged in the circumferential direction and then connected from the axial direction by the axial members 120, the formability and the assemblability of the roller bearing cage 100 can be both improved.

Since the taper roller 20 is configured to be guided by the axial member 120 inserted therethrough, it can stably rotate. Besides, the damage of the roller bearing cage 100 can be inhibited by reducing impact force caused between the arc-shaped parts 110x or between the arc-shaped parts 110y. Furthermore, occurrence of abnormal noise caused by the impact between the arc-shaped parts 110x or between the arc-shaped parts 110y can be inhibited. In addition, the taper rollers 20 and the roller bearing cage 100 are stably rotated, and hence bearing torque can be reduced.

Moreover, since there is no need to provide plural axial members 120 to one taper roller 20, the number of components can be reduced, and the production cost can be reduced. Besides, both the ends of the axial members 120 are supported by the arc-shaped parts 110x and the arc-shaped parts 110y arranged in the circumferential direction at both ends in the axial direction of the taper rollers 20, and hence, the taper rollers 20 can be stably supported. Therefore, the taper rollers 20 and the roller bearing cage 100 can be further stably rotated.

Furthermore, the column part 116 (the second member) for partitioning the taper rollers 20 adjacent to each other in the circumferential direction extends along the axial direction between the arc-shaped part 110x and the arc-shaped part 110y. Therefore, the taper rollers 20 adjacent to each other can be stably held in the roller bearing cage 100.

Besides, the column part 116 is formed to connect the arc-shaped part 110x and the arc-shaped part 110y disposed at both ends in the axial direction of each taper roller 20 provided in the ring-shaped space 13. Therefore, the arc-shaped part 110x and the arc-shaped part 110y disposed at both ends in the axial direction of the taper roller 20 and the column part 116 are integrally formed, and hence, the number of components can be reduced, and the production cost can be reduced.

Furthermore, the arc-shaped parts 110x and the arc-shaped parts 110y have a uniform thickness in the axial direction owing to the thin portions 112, the roller bearing cage 100 can be made compact. Accordingly, the roller bearing 1 can be made compact.

### [Embodiment 2]

Next, a roller bearing cage 200 according to Embodiment 2 will be described with reference to Fig. 5. It is noted that like reference numerals may be sometimes used to refer to like elements used in Embodiment 1 so as to omit the detailed description in describing the structure of Embodiment 2. This also applies to other embodiments described later. As illustrated in Fig. 5, a taper roller 30 of a taper roller bearing 2 has a hole 32x and a hole 32y not penetrating each other instead of the through hole 22 of Embodiment 1. The hole 32x and the hole 32y are formed along the central axis of the taper roller 30. Here, the hole 32x is formed on a smaller-diameter-side end surface 30x (one end in the axial direction) of the taper roller 30. Similarly, the hole 32y is formed on a larger-diameter-side end surface 30y (the other end in the axial direction) of the taper roller 30. On the other hand, axial members 220x and 220y (connecting members) are formed respectively correspondingly to the holes 32x and 32y. In other words, two axial members are formed correspondingly to one taper roller 30. The axial members 220x and 220y are formed to have lengths respectively corresponding to the holes 32x and 32y. Each of the axial members 220x and 220y is shorter than the axial member 120 of Embodiment 1. Here, the axial member 220x connects, from the axial direction, the arc-shaped parts 110x arranged in the circumferential direction, and is inserted into the hole 32x to guide the roller. Similarly, the axial member 220y connects, from the axial direction, the arc-shaped parts 110y arranged in the circumferential direction, and is inserted into the hole 32y to guide the roller. In this manner, the roller bearing cage 200 of Embodiment 2 can attain the same effects as in the above-described embodiment in a point where the roller bearing cage 200 has a structure similar to that of the above-described embodiment.

### [Embodiment 3]

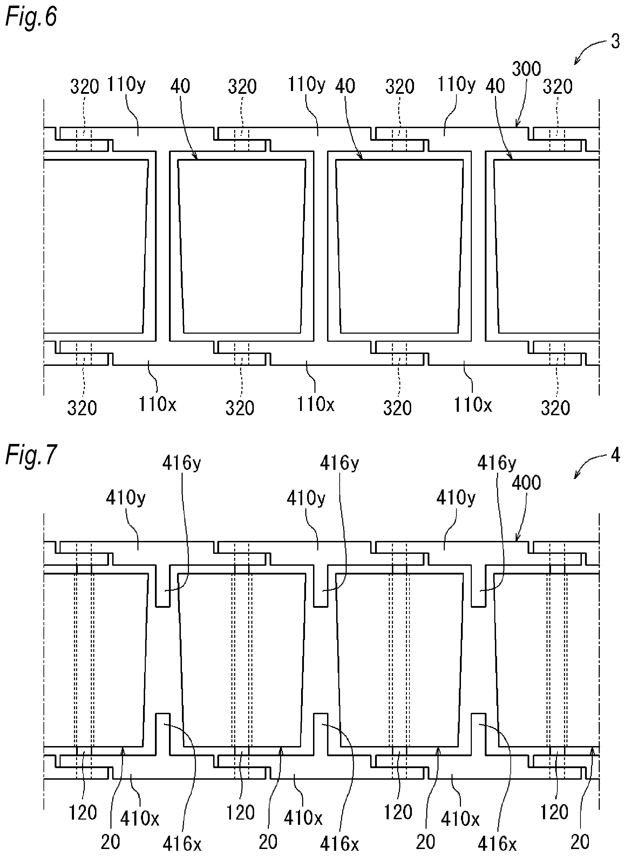

Next, a roller bearing cage 300 according to Embodiment 3 will be described with reference to Fig. 6. As illustrated in Fig. 6, an axial member 320 (a connecting member) of the roller bearing cage 300 of a taper roller bearing 3 is configured to have a length sufficient for connecting the arc-shaped parts 110x or the arc-shaped parts 110y. In other words, a taper roller 40 has neither a through hole nor a hole. Therefore, the taper roller 40 is configured to be held in each pocket of the roller bearing cage 300. In this manner, the roller bearing cage 300 of Embodiment 3 can attain the same effects as in the above-described embodiment in a point where the roller bearing cage 300 has a structure similar to that of the above-described embodiment.

### [Embodiment 4]

Next, a roller bearing cage 400 according to Embodiment 4 will be described with reference to Fig. 7. As illustrated in Fig. 7, the roller bearing cage 400 of a taper roller bearing 4 is configured to have column parts not connected to each other. In other words, the column parts may be configured to be separated from each other as long as they are disposed to be spaced from each other at equal intervals in the circumferential direction between an arc-shaped part 410x and an arc-shaped part 410y for partitioning the taper rollers 20. The arc-shaped part 410x has a column part 416x (a second member) extending in the axial direction for partitioning the taper rollers 20 adjacent to each other in the circumferential direction. Similarly, the arc-shaped part 410y has a column part 416y (a second member) extending in the axial direction for partitioning the taper rollers 20 adjacent to each other in the circumferential direction. It is necessary, however, that the arc-shaped part 410x and the arc-shaped part 410y are connected to each other by the axial members 120 (the connecting members) via the taper roller 20 in the roller bearing cage 400. In this manner, the roller bearing cage 400 of Embodiment 4 can attain the same effects as in the above-described embodiment in a point where the roller bearing cage 400 has a structure similar to that of the above-described embodiment. Besides, the roller bearing cage 400 can be reduced in weight because of the column parts 416x and 416y reduced in length.

### [Embodiment 5]

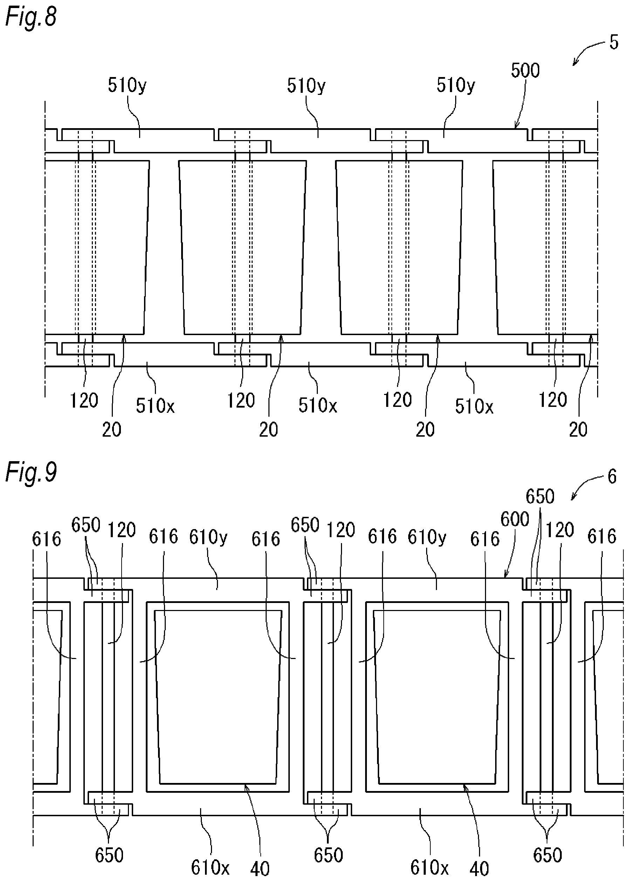

Next, a roller bearing cage 500 according to Embodiment 5 will be described with reference to Fig. 8. As illustrated in Fig.8, the roller bearing cage 500 of a taper roller bearing 5 is configured not to have a column part. It is, however, necessary that an arc-shaped part 510x and an arc-shaped part 510y are connected to each other by an axial member 120 (a connecting member) via the taper roller 20 in the roller bearing cage 500. In this manner, the roller bearing cage 500 of Embodiment 5 can attain the same effects as in the above-described embodiment in a point where the roller bearing cage 500 has a structure similar to that of the above-described embodiment.

Besides, the roller bearing cage 500 can be reduced in weight because of the omission of a column part.

### [Embodiment 6]

Next, a roller bearing cage 600 according to Embodiment 6 will be described with reference to Fig. 9. As illustrated in Fig. 9, each roller bearing cage 600 of a taper roller bearing 6 is configured to be formed in a rectangular frame shape by an arc-shaped part 610x and an arc-shaped part 610y, and column parts 616. Each of the column parts 616 adjacent to each other is provided with a connecting part 650 to be connected through the axial member 120 (the connecting member). In this manner, the roller bearing cage 600 of Embodiment 6 can attain the same effects as in the above-described embodiment in a point where the roller bearing cage 600 has a structure similar to that of the above-described embodiment.

The respective embodiments of the present invention have been described so far, but it is noted that the present invention is not limited to these embodiments but can be practiced in accordance with other various embodiments.

For example, although the cage is uniformly configured to have a similar structure in each of the above-described embodiments, one roller bearing cage may employ an appropriate combination of the structures of the respective embodiments.

The circumferential length of each arc-shaped part corresponding to the first member is not limited to the length corresponding to one taper roller, but may be a circumferential length sufficient for holding a plurality of taper rollers.

Besides, although the roller bearing cage described in each of the above-described embodiments is described on the assumption of a large taper roller bearing used for, for example, supporting a main shaft or the like in the wind power generation, the application is not limited to the large taper roller bearing, but the present invention is similarly applicable to a small taper roller bearing.

Furthermore, the roller bearing cage described in each of the above-described embodiments is described on the assumption of a taper roller bearing. The present invention is, however, applicable not only to a taper roller but also to a cylindrical roller.

This application is based upon Japanese patent application (Japanese Patent Application No. 2014-029508) filed on February 19, 2014, the entire contents of which are incorporated herein by reference.

### Industrial Applicability

A roller bearing cage that is improved in both formability and assemblability and is capable of inhibiting formation of a clearance between adjacent cages can be realized.

### Reference Signs List

1 roller bearing
12 inner ring
12a inner ring raceway surface
12x small rib
12y large rib
14 outer ring
14a outer ring raceway surface
13 ring-shaped space
20 taper roller (roller)
20a conical surface
20x smaller-diameter-side end surface (one end in axial direction) of roller
20y larger-diameter-side end surface (the other end in axial direction) of roller
22 through hole
100 roller bearing cage
110x arc-shaped part (first member)
110y arc-shaped part (first member)
112 thin portion
114 circumferential length covering prescribed range in circumferential region
116 column part (second member)
120 axial member (connecting member)
2 taper roller bearing
200 roller bearing cage
30 taper roller
30x smaller-diameter-side end surface (one end in axial direction) of roller
30y larger-diameter-side end surface (the other end in axial direction) of roller
32x hole
32y hole
220x axial member (connecting member)
220y axial member (connecting member)
3 taper roller bearing
300 roller bearing cage
320 axial member (connecting member)
40 taper roller
4 taper roller bearing
400 roller bearing cage
410x arc-shaped member (first member)
410y arc-shaped member (first member)
416x column part (second member)
416y column part (second member)
5 taper roller bearing
500 roller bearing cage
510x arc-shaped part (first member)
510y arc-shaped part (first member)
6 taper roller bearing
600 roller bearing cage
610x arc-shaped part (first member)
610y arc-shaped part (first member)
616 column part (second member)
650 connecting part

## Claims

1. A roller bearing cage for holding a plurality of rollers disposed rollably in a ring-shaped space formed between an inner ring raceway surface on an outer circumferential surface of an inner ring and an outer ring raceway surface on an inner circumferential surface of an outer ring, the roller bearing cage comprising:
first members disposed at both ends in an axial direction of the rollers disposed in the ring-shaped space, and divided into a plurality of segments each having a circumferential length covering a prescribed range of a circumferential region; and
connecting members connecting, from the axial direction, the first members arranged in a circumferential direction.

2. The roller bearing cage according to claim 1, wherein
each of the rollers has a hole extending along a central axis thereof, and
each of the connecting members connects, from the axial direction, the first members arranged in the circumferential direction, and is inserted into the hole of a corresponding one of the rollers for guiding the roller.

3. The roller bearing cage according to claim 2, wherein
the hole extending in the central axis of the roller is formed as a through hole penetrating in the axial direction, and
each of the connecting members is inserted through the through hole from a side of one end in the axial direction of the roller to a side of the other end in the axial direction of the roller, and connects, from the axial direction, the first members arranged in the circumferential direction at both ends in the axial direction of the roller.

4. The roller bearing cage according to any one of claims 1 to 3, wherein
the first members has second members extending in the axial direction for partitioning the rollers adjacent to each other in the circumferential direction.

5. The roller bearing cage according to claim 4, wherein
the second members are formed to connect the first members disposed at both ends in the axial direction of the rollers disposed in the ring-shaped space.

6. The roller bearing cage according to any one of claims 1 to 5, wherein
each of the first members has a thin portion formed to have a small thickness in the axial direction as a part of an end portion of the first member to be connected by a corresponding one of the connecting members to another first member, and the first members have a uniform thickness in the axial direction by overlapping the thin portions of the first members.

## Amended claims

### Amended claims under Art. 19.1 PCT

**1.** (amended) A roller bearing cage for holding a plurality of rollers disposed rollably in a ring-shaped space formed between an inner ring raceway surface on an outer circumferential surface of an inner ring and an outer ring raceway surface on an inner circumferential surface of an outer ring, the roller bearing cage comprising:
first members disposed at both ends in an axial direction of the rollers disposed in the ring-shaped space, and divided into a plurality of segments each having a circumferential length covering a prescribed range of a circumferential region; and
connecting members connecting, from the axial direction, the first members arranged in a circumferential direction,
wherein
each of the rollers has a hole extending along a central axis thereof,
each of the connecting members connects, from the axial direction, the first members arranged in the circumferential direction, and is inserted into the hole of a corresponding one of the rollers for guiding the roller, and
each of the first members has a thin portion formed to have a small thickness in the axial direction as a part of an end portion of the first member to be connected by a corresponding one of the connecting members to another first member, and the first members have a uniform thickness in the axial direction by overlapping the thin portions of the first members.

**2.** delete)

**3.** (amended) The roller bearing cage according to claim 1, wherein
the hole extending in the central axis of the roller is formed as a through hole penetrating in the axial direction, and
each of the connecting members is inserted through the through hole from a side of one end in the axial direction of the roller to a side of the other end in the axial direction of the roller, and connects, from the axial direction, the first members arranged in the circumferential direction at both ends in the axial direction of the roller.

**4.** The roller bearing cage according to any one of claims 1 to 3, wherein
the first members has second members extending in the axial direction for partitioning the rollers adjacent to each other in the circumferential direction.

**5.** The roller bearing cage according to claim 4, wherein
the second members are formed to connect the first members disposed at both ends in the axial direction of the rollers disposed in the ring-shaped space.

**6.** delete)
